(19) Europäisches Patentamt
European Patent Office
Office européen des brevets

(11) **EP 3 438 897 A1**

(12) **EUROPEAN PATENT APPLICATION**

(43) Date of publication:
**06.02.2019 Bulletin 2019/06**

(51) Int Cl.:
***G06Q 10/06*** *(2012.01)*

(21) Application number: **17190687.8**

(22) Date of filing: **12.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.08.2017 EP 17185030**

(71) Applicant: **Swisscom (Schweiz) AG 3050 Bern (CH)**

(72) Inventor: **Musat, Claudiu 3050 Bern (CH)**

(74) Representative: **Leach, Sean Adam et al Mathys & Squire LLP The Shard 32 London Bridge Street London SE1 9SG (GB)**

(54) **TASK ALLOCATOR FOR CROWD SOURCING NETWORK**

(57) A task allocator (30) is provided for: (i) determining which open tasks to allocate on a crowd sourcing network (10), and (ii) allocating said tasks to users of the crowd sourcing network (10). The task allocator (30) includes a processor (31) and a data store (32), and is configured to determine which tasks to allocate to users of the crowd sourcing network (10) based on indications of previous tasks stored in the data store (32). The data store (32) is updated dynamically in response to new tasks being finished. Based on the contents of the dynamically updated data store (32), the task allocator (30) may adaptively allocate tasks to a user. The task allocator (30) determines which tasks to allocate based on a plurality of determined metrics, which are determined based on the contents of the data store (32).

Fig. 1

**Description**

Field of the invention

The present invention relates to the allocation of tasks in a crowd sourcing network.

Background

Crowd sourcing networks may be used for jobs which require a lot of human input. One example is for correctly labelling the contents of images, so that the images and the known contents may be used to train a convolutional neural network ('CNN') for image detection software. For such a job, the end goal may be to have enough training data to train the CNN to satisfactorily determine the contents of images based on image data alone. This may require a very large amount of human input to provide accurate labelling for the contents of each of the images. The job of training the CNN may therefore be split up into a series of tasks, each of which comprises a user labelling the contents of a plurality of images.

Such jobs may be hosted on a crowd sourcing network so that the network may provide users with access to available tasks for that job. A crowd sourcing network may, at any one time, be hosting a plurality of such jobs. Consequently, a user looking for work on the crowd sourcing network may be faced with an inordinately large number of tasks that they could potentially work on, with seemingly no suitable way for deciding which tasks to work on. Similarly, a job proprietor may be competing with a plurality of other job proprietors, which may result in jobs not being finished on time.

Summary of the invention

Aspects and examples of the present disclosure provide a system for allocating open tasks on a crowd sourcing network, as set out in the claims. These aim to address at least a part of the above-described technical problems.

In an aspect there is provided a task allocator for a crowd sourcing network. The task allocator comprises a data store storing: an association between (i) a plurality of finished tasks, (ii) a plurality of users of the crowd sourcing network and (iii) a plurality of jobs and, for each job, a completion criterion. In the event that the completion criterion is satisfied, the job is complete. The task allocator is configured so that, in the event that an open task is finished by a first user of the crowd sourcing network, the task allocator adds, to the stored association, an identifier of the finished task, the associated job and the first user. The task allocator is configured to allocate an open task to a second user of the crowd sourcing network, e.g. provide a user with a selection of available tasks from which they may select a task they wish to engage in, based on a plurality of metrics, wherein the plurality of metrics comprises:

- A first metric for each of a plurality of available jobs. Each first metric comprises a probability that its respective corresponding job will be completed. The first metric is determined based on an indication of finished tasks associated with the corresponding job and the completion criterion for said job. The indication of finished tasks is determined based on the stored association.
- A second metric for each of the plurality of available jobs. Each second metric comprises a return function determined based on: (i) a probability for the task being finished estimated based on tasks finished by the user, wherein said task is a task allocatable to the user pertaining to said job and (ii) the first metric for said job.
- A third metric comprising an indication of user history for the second user. The third metric is determined based on finished tasks, finished by the second user and forming part of an available job, and also the first metric for each said abailable job comprising said finished tasks finished by the second user.

The task allocator may enable the allocation of open tasks to be dependent upon job completion. Each open task is a task which has not yet been attempted or failed; it is a task which is to be finished for the job to be completed. It may be a task which has been allocated to the user for the user to finish. A user may only receive a return for finishing an open task in the event that the job associated with that open task is completed. This return, and the probability for the job being completed, may therefore depend on tasks being finished by other users. The task allocator determines the metrics on-the-fly for each of a plurality of tasks which could potentially be allocated to a user. The task allocator is configured to continuously receive, from user devices, indications of tasks being finished, and to update the data store based on such indications. Using this continually updated data store, the task allocator may determine which open tasks to allocate to a user based on the most up to date data. This technical implementation enables accurate and current completion probabilities to be determined for completion of each job, and these may be used when determining which open tasks to allocate, so that the allocation of open tasks, and a return for finishing that open task, may be dependent upon job completion.

The plurality of finished tasks in the association may comprise an indication of the finished tasks, such as an indication that that task has been finished. The data store stores an association, for each finished task, between: (i) an indication of said finished task, (ii) the user responsible for finishing the task, and (iii) the job said task is a component of (associated with).The association links each finished task with a job corresponding to that task and the user who finished that task. This enables the number of tasks a user has finished for each job to be determined, and for metrics to be determined therefrom. The association may enable a mapping between a finished task and: (i) the job corresponding to that task and (ii) the user who finished that task. The completion criterion may be dependent upon the indication of finished tasks. For example, it may be a threshold number of finished tasks. It may represent a convergence criterion. It may be determined based on the number of indications, or an indication of the number, of finished tasks in the association. Upon completion of a job, the task allocator is configured to no longer allocate tasks for that job, or any return associated with finished tasks for that job will be set to zero.

In the event that the open task is finished by the first user, the task allocator receives an indication for the outcome of that task. The identifier of the finished task added to the association may comprise the indication of the outcome of that task. The number of finished tasks in the association therefore increases by one, as does the number of finished tasks in the association associated with the corresponding job, and the first user.

Allocation of an open task may comprise allocation of a plurality of open tasks. It may comprise sending, to the second user, an offered tasks message. The allocation may comprise selecting one or a plurality of open tasks and providing the user with an indication of such open tasks. The plurality of metrics may be used to determine a relevance function for each job. Allocating open tasks may be based on the determined relevance function for associated jobs. Allocation may comprise ordering open tasks. For instance, allocation may comprise selecting a plurality of the plurality of available open tasks. It may further comprise ordering said selection. It may comprise selecting a subset of the available jobs and communicating them to the user. This allocation is based on the plurality of metrics, which may be determined by the task allocator. The metrics are determined based on the contents of the association in the data store. The metrics may comprise a score or ranking, such as a numerical value. The metrics may be used to determine, for the task allocation, which open tasks are selected and/or an order for the selection of open tasks. Open tasks may be ranked based on their determined metrics. A ranking system may comprise more than one ranking value so that the ranking may be based on several variables. The second user may select which open task they wish to do. This will be based on the open tasks allocated to the user. The user may filter the available allocated open tasks based on one variable or metric.

The probability that a respective corresponding job will be completed may be determined based on a selected condition, such as a time limit (deadline) or convergence criterion based on task quality. The probability may thus comprise a probability that the job will be completed in accordance with the selected condition, e.g. before the deadline. For example, this may be determined based on a rate of progression for tasks associated with that job, or a number of tasks for that job which still need to be finished. This is determined based on the indication of finished tasks in the association.

Second and third metrics are both user-dependent. For instance, the indication of user history comprised in the third metric may comprise an indication of jobs that the user has previously been associated with, i.e. jobs for which the user has previously completed tasks for. This may be determined based on the indications in the association. It may also comprise an indication of, for the jobs associated with the user, which of those jobs are complete and which are not. It may comprise an indication of the job completion probability for those jobs. It may also comprise an estimate for the probability of the task being finished, or a quality associated with their tasks, based on previous tasks undergone by the user. For jobs for which the user has finished tasks which are not complete, and for which a return for the user is dependent on the completion of the job, the third metric may comprise an indication of a total return the user may stand to receive in the event that the jobs are completed.

The return function for each open task and user may comprise an indication of an expected return for that user in the event that a job associated with that open task is completed. The return function may be based at least in part, on a determined probability that the return may be realised. It may be determined based on a total available return for that job, which for example may be stored in the data store, as well as an indication of a total number of finished tasks required for that job to be completed.

In an embodiment, in the event that a open task is finished and a quality threshold for the task is satisfied, the task is successful; and in the event that the quality threshold is not satisfied, the task is unsuccessful. The quality threshold may comprise a selected level of accuracy for the task. The completion of job requires successful finished tasks. The completion criterion for a job may be based on success rates for the finished tasks associated with that job. A job may be completed in the event that a threshold number of tasks have been finished and a threshold proportion of the finished tasks were successful. The return for a user may be dependent on the success of the task. In the event that a task is unsuccessful, the return may be reduced; it may be zero. This may enable probabilities to be determined which reflect the likelihood of a user successfully finishing a open task, based on previous tasks they have finished. The probabilities may therefore be determined more accurately for job completion, as they are able to include user-dependent task completion probabilities.

In an embodiment, the third metric is determined based on second metrics. For example, for each finished task, finished by the second user and forming part of an available job, the third metric is determined based also on a second metric determined for said finished task. This may enable a total amount of return to be determined for a user based on tasks they have finished for jobs which are incomplete.

In an embodiment, the association comprises an indication of success for each finished task, and each user has a quality metric based on indications of success for each of their finished tasks. The quality metric may comprise an indication of the probability that a user will successfully finish a open task. It may comprise a numerical value such as an average success rate for previous tasks associated with that user. This may enable user-dependent probabilities to be determined, on-the-fly, based on the stored data in the data store. Such probabilities may be used for determination of the second and third metrics. In an embodiment, at least one of the second metric and the third metric is determined based on the user quality metric. Both may be determined based on the quality metric.

In an embodiment, the association comprises a time at which each task was finished; and the first metric for each job is determined based on the times at which tasks for said job have been completed. The time may comprise an indication of the time at which the task was finished. It may be an indication of a time bin in which the task was finished, wherein the bin may span a portion of the day, such as a minute, an hour etc. or it may span a day, a week, a month. The indication of the time may be used to determine a rate of convergence towards the completion criterion, or a likely completion time. This may be used when determining the probability of job completion. For instance, the times may be used to determine whether or not the job is likely to be completed before a time deadline. This may enable probabilities to be determined which have a time-dependence and may provide an indication of whether a job is likely to be completed in time.

In an embodiment, the second metric is determined based on a marginal increase in job completion probability which would arise in the event that the user successfully finishes the corresponding task. This may enable job completion probabilities to be determined which allow for a change in probability which would result upon successful completion of an open task. For example, this may influence time constraints in that a successfully finished task may bring forward an expected job completion time, for example so that it is before a time deadline. This may also enable the linking of the return for a user to the completion of the job with increased accuracy as the return may be determined based on the contribution that that user made to an increase in the probability of the job being completed.

In an embodiment, the plurality of metrics comprises a fourth metric for each of the available jobs, the fourth metric comprising an instant return determined based on a total return for the job and the completion criterion. A user may therefore receive a total return comprising the instant return and a job completion dependent return upon completion of the job.

In an embodiment, each job has a limit threshold, and in the event that the limit threshold is satisfied before the job completion criterion, the job is unsuccessful; and the first metric for each job is determined based on the limit threshold for said job. The limit threshold may comprise a threshold for a failed job. For instance, the limit threshold may represent a maximum number of tasks available for a job, and in the event that that number of tasks is reached with insufficient successfully finished tasks for the completion criterion to be reached, the job will be deemed to have failed. The completion probability for a job may therefore be determined based on the limit threshold to allow for occurrences in which a job will not be completed to a satisfactory level of quality.

In an embodiment, the stored association is dynamic so that in the event that a new task is finished by the first user, an indication of the new finished task is added to the association, and in the event that the task allocator determines that the second user is looking for an open task, the open task is allocated to the second user adaptively based on the dynamic association. The dynamic stored association is continually updated. It represents an up to date indication of finished tasks. The adaptive task allocation allows for updates to the association to be considered when determining the task allocation. For instance, tasks finished by other users will contribute to the determination of task allocation to the second user. Tasks are allocated based on the most up to date data (i.e. that stored in the dynamic association).

In an embodiment, the task allocator is configured to allocate open tasks adaptively based on the indication of finished tasks in the stored association, wherein the finished tasks include the new finished task.

In an aspect there is provided a task allocator comprising a data store storing: a dynamic association between (i) a plurality of finished tasks, (ii) a plurality of users and (iii) a plurality of jobs; and for each job, a completion criterion. In the event that the completion criterion is satisfied, the job is complete. The task allocator is configured to allocate an open task adaptively, based on the dynamic association, to a second user based on a plurality of metrics. The plurality of metrics comprises:

- A first metric for each of a plurality of available jobs. Each first metric comprises a probability that its respective corresponding job will be completed, wherein each first metric is determined based on an indication of finished tasks associated with its corresponding job and the completion criterion for said job.
- A second metric for each of the plurality of available jobs. Each second metric comprises a return function determined based on: (i) a task completion probability estimated based on tasks finished by the user and (ii) the first metric for said job.

- A third metric comprising an indication of user history for the second user. The third metric is determined based on the jobs associated with the second user and the first metrics for said jobs.

In an embodiment, the dynamic association comprises an association which is updated in the event that a task is finished by a first user.

In an embodiment, updating the dynamic association comprises adding an identifier of the finished task, the associated job and the first user to the stored association.

In an embodiment, allocating the task adaptively to the second user comprises: in the event that an indication of a new finished task is added to the dynamic association and the second user is looking for an open task, allocating an open task to the second user based on the finished tasks in the dynamic association, wherein the finished tasks include the new finished task.

In an aspect there is provided a method of allocating open tasks in a crowd sourcing network. The method comprises: in the event that a task is finished by a first user, adding, to a stored association, an identifier of: (i) the finished task, (ii) an associated job and (iii) the first user. The stored association stores: an association between (i) a plurality of finished tasks, (ii) a plurality of users and (iii) a plurality of jobs; and for each job, a completion criterion. In the event that the completion criterion is satisfied, the job is complete. The method comprises:

- Determining a first metric for each of a plurality of available jobs. Each first metric comprises a probability that its respective corresponding job will be completed, wherein the first metric is determined based on an indication of finished tasks associated with the corresponding job and the completion criterion for said job, and the indication of finished tasks is determined based on the stored association.
- Determining a second metric for each of the plurality of available jobs. Each second metric comprises a return function determined based on: (i) a task completion probability estimated based on tasks finished by the user and (ii) the first metric for said job.
- Determining a third metric comprising an indication of user history for the second user. The third metric is determined based on the jobs associated with the second user and the first metrics for said jobs.
- Allocating a task to a second user based on a plurality of metrics. The plurality of metrics comprises the first, second and third metrics.

In an aspect there is provided a method of allocating open tasks in a crowd sourcing network. The method comprises allocating an open task adaptively, based on a dynamic association, to a second user based on a plurality of metrics. The dynamic association comprises: an association between (i) a plurality of finished tasks, (ii) a plurality of users and (iii) a plurality of jobs; and for each job, a completion criterion. In the event that the completion criterion is satisfied, the job is complete. The plurality of metrics comprises:

- A first metric for each of a plurality of available jobs. Each first metric comprises a probability that its respective corresponding job will be completed, wherein the first metric is determined based on an indication of finished tasks associated with the corresponding job and the completion criterion for said job.
- A second metric for each of the plurality of available jobs. Each second metric comprises a return function determined based on: (i) a task completion probability estimated based on tasks finished by the user and (ii) the first metric for said job.
- A third metric comprising an indication of user history for the second user. The third metric is determined based on the jobs associated with the second user and the first metrics for said jobs.

In an aspect there is provided a computer program product comprising program instructions configured to program a processor to perform any of the methods described or claimed herein.

Figures

Embodiments will now be described, by way of example only, with reference to the accompanying drawings in which:

Fig. 1 shows a schematic drawing of a crowd sourcing network system.

Fig. 2 shows a timing diagram indicating a method of operation of the network system of Fig. 1.

Specific description

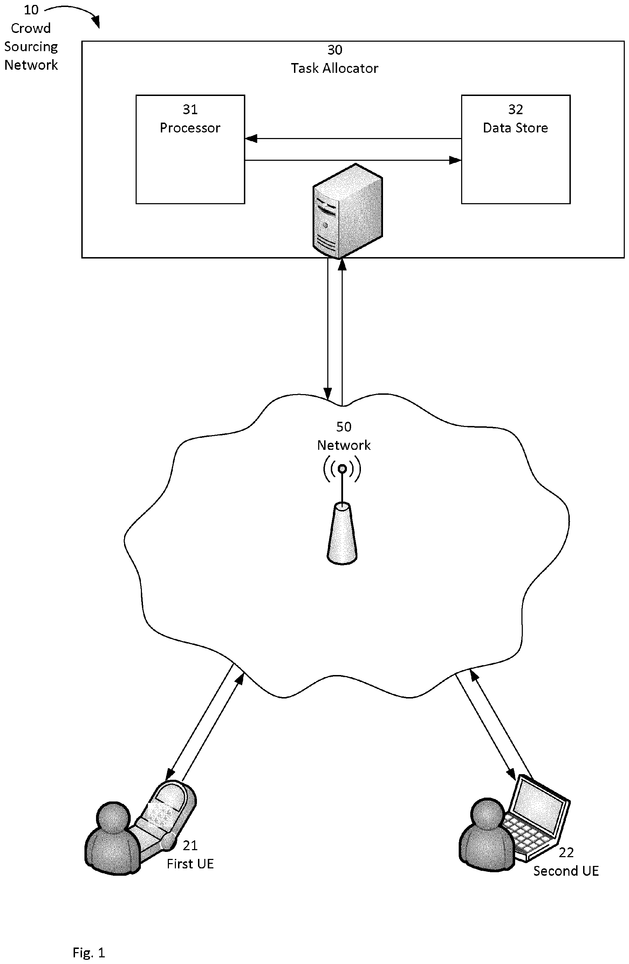

Fig. 1 shows a task allocator 30 for allocating open tasks in a crowd sourcing network 10.

On a crowd sourcing network 10 there will be a number of jobs which are to be completed. Each of these jobs will include a number of tasks. Tasks are said to be 'open' if they need finishing (i.e. they are incomplete/have yet to be attempted). When enough tasks have been finished for one job, that job is completed. Users of the crowd sourcing network 10 may access the network 10 and be allocated open tasks for them to work on. In return for successful completion of this work, the user will be rewarded. In the event that a user is looking for open tasks, the task allocator 30 of Fig. 1 determines which open tasks to allocate to the user. The task allocator 30 may be arranged so that a user's reward for finishing a task is only be realised in the event that the overall job is completed, or at least a portion of the user's reward for finishing the task is realised in the event that the overall job is completed. The task allocator 30 is configured to allocate open tasks based at least in part on possible rewards for the user. The exact allocation of open tasks is determined based on a plurality of metrics determined by the task allocator 30.

The task allocator 30 is arranged to determine such metrics on-the-fly. It stores indications of previous tasks which have been finished in a data store 32 which is dynamically updated (e.g. each time a task is finished). Each metric is determined based on the present contents of the data store 32, i.e. the indications of previous tasks. Open tasks may therefore be allocated to users in an adaptive manner based on the indications present in the data store 32 at the time that each task is being allocated. The determination of which open task to allocate to a first user may thus be influenced by completion of a separate task by a second user. The task allocator 30 may therefore determine metrics, and thus which open task to allocate to a user, based on up-to-date determinations for the probability of that job being completed within a certain time frame. This may enable a more efficient allocation of open tasks, which may result in a greater percentage of jobs being completed.

Fig. 1 shows a crowd sourcing network 10. The crowd sourcing network 10 includes a task allocator 30 comprising a processor 31 and a data store 32. The processor 31 is coupled to the data store 32. A first user equipment (UE) 21 and a second UE 22 may connect to the crowd sourcing network 10. A first user may access the crowd sourcing network 10 using the first UE 21 and a second user may access the crowd sourcing network 10 using the second UE 22. Both of the UEs are connected to the task allocator 30 over a network 50.

The processor 31 is coupled to the data store 32 to enable reading and writing of the contents of the data store 32 by the processor 31. The data store 32 stores an association between: a plurality of finished tasks, a plurality of users and a plurality of jobs. This association may be in the form of a look-up table in which each tuple (e.g. a row or column) comprises an indication of one finished task. Each row will also comprise an indication of the user who was responsible for finishing the task, and an indication of the job the task was a part of. The data store 32 also stores a completion criterion for each job. Typically, one completion criterion is stored per job, so that for an open task, the processor may determine the completion criterion by identifying a completion criterion in the data store which corresponds to the job associated with that open task. The completion criterion may be some form of a threshold which indicates that the job is completed, so that once this criterion has been satisfied, the job may be marked as complete. This criterion may be, for example, in the form of a minimum number of finished tasks that are necessary, or in the form of a convergence criterion relating to the success of finished tasks for that job. These may be stored on volatile and/or non-volatile memory of the data store 32.

The first and second UE each enable their respective user to access open tasks on the crowd sourcing network 10. It is to be appreciated that the crowd sourcing network 10 may be accessed by more than two UEs, and the number of UEs may vary over time. For example, there may be a plurality of UEs, and at any one time, some of the plurality of UEs may be connected to the network 10 while others are not. The UEs may communicate with the task allocator 30, over the network 50, using network messages. For example a first message may be sent from the first UE 21 requesting open tasks to be allocated, and in response the task allocator 30 may send a message to the first UE 21 indicating an allocated task. A network message will also be sent from the first UE 21 to the task allocator 30 in the event that a user has finished a task. A user is able to work on tasks through a UE. Multiple users may access tasks on the crowd sourcing network 10 using the same user equipment.

The association in the data store 32 is dynamically updated so that newly finished tasks may continually be added to the association. Therefore, in the event that a task is finished by a first user, the task allocator 30 adds, to the stored association, an identifier of the finished task, as well as an identifier of the associated job and an identifier of the first user. The task allocator 30 may then allocate open tasks to a second user based on newly finished tasks, as well as the finished tasks previously stored in the data store 32. The newly finished tasks will comprise the task finished by the first user.

The task allocator 30 is configured to determine which open tasks to allocate to a second user based on the stored association. As the stored association is updated dynamically, the open tasks allocated to the second user will be influenced by all tasks in the stored association and thus will include tasks finished by the first user. The task allocator 30 is configured to adaptively allocate open tasks to a user. Here, 'adaptively' refers to the ability of the task allocator 30 to allocate open tasks to a user based on the indications of finished tasks in the stored association, which includes tasks finished by said user, as well as tasks finished by other users. For instance, this may result in the open tasks being allocated to a user varying over time depending on activity from other users on the crowd sourcing network 10.

The task allocator 30 is configured to determine which open task to allocate to a user based on a plurality of metrics. The task allocator 30 is configured to determine that a second user is looking for an open task (e.g. based on a received indication). In response to determining that the second user is looking for an open task, the task allocator 30 is configured to: (i) determine the plurality of metrics based on the contents of the stored association at that time, and (ii) determine, based on the plurality of metrics, which open tasks to allocate to a user. The task allocator 30 is configured to determine which open task to allocate to a user (step ii) by determining a relevance function for each of the available jobs for which open tasks could be allocated. Open tasks may be allocated to the user based on their determined relevance. For example, the task allocator 30 may allocate the most relevant open task to a user. Alternatively, the task allocator 30 may send, to the user, a list comprising a plurality of open tasks, the list being ordered in terms of the determined relevance. In this case, the user may select which open task they do.

In one embodiment, the task allocator 30 is configured to retrieve, from the association, the relevant indication of tasks, users and jobs to determine the job relevance function as follows:

*Jobs and tasks*

The task allocator 30 is configured to allocate open tasks for each of a plurality of jobs. Each job comprises a plurality of tasks. A job is determined to be complete in the event that a completion criterion is satisfied. The completion criterion for each job is stored in the data store 32 and may be based on a number of tasks to be finished. However, it is to be appreciated that a number of different completion criterion may be imposed, for example rates of convergence to completion may be used. Also, different tasks may be associated with different levels of importance, such that some tasks may be more important to completion of the job than others. Each job completion criterion may be determined to account for the importance of composite finished tasks associated with that job. Each job may also be associated with a corresponding total return (e.g. a total sum of return available) and a task history for that job.

The task allocator 30 comprises a plurality of jobs $\{j_1 ... j_k\}$. Each job is assigned a status, where $status(j_i) \in \{-1,0,1\}$. The status provides an indication of whether the job is still open, finished or failed. A job in progress, i.e. open, has a status value of 0, a completed job has a status value of 1 and a failed job has a value of -1. Each job $j_i$ comprises a corresponding list of tasks $j_i = \{t_{i,1} ... t_{i,m}\}$. Each job has a limit threshold associated therewith, which may be stored in the data store 32. The limit threshold may be a maximum number of tasks $\zeta_i$ which may be set a priori, but may also be changed by a proprietor of the job, such as to allow for jobs which may not be completed on time. In the event that the limit threshold is reached before the job is completed, the job will be failed.

Each task may be associated with a quality threshold. In the event that the quality threshold is not satisfied for a finished task, that task is said to be unsuccessful. The quality threshold relates to work performed on that task so that, in the event that the work does not meet a required standard, the task will not be successful. This prevents finished tasks of a low quality from being rewarded, because they will have served no purpose (e.g. training a CNN). Each task may be assigned a status -$status(t_{i,m}) \in \{0,1\}$, where 1 represents a task being successfully completed and 0 otherwise. 0 may represent an open task e.g. an unsuccessful task or a task which has yet to be attempted. It may be possible to remedy an unsuccessful task. Thus, such as a status of 0 may still change. For job $j_i$, $t_i^0$ represents the number of outstanding tasks, and $t_i^1$ represents the number of completed tasks.

*Job utility progress and workload*

The processor 31 is configured to determine a job utility function for each job. One example of a completion criterion is based on the job utility function. It is to be appreciated that the utility function may take many forms, such as mathematical models or logic algorithms. In this example, the job is determined to be complete (the completion criterion is satisfied) in the event that a utility value for the job, determined by the processor 31 based on the utility function, is greater than a selected threshold utility: $u(j_i) > \tau_u(j_i)$, where $u(j_i)$ is the utility function for job $j_i$. The data store 32 also stores, for each job, an initial utility value $u_0(j_i)$, which is the utility value before any of its open tasks have been finished. In some embodiments, for example where jobs relate to machine learning systems, the utility function may be the precision, accuracy or f-score. The utility function may represent the number of tasks for that job.

Another example of a completion criterion is also based on a progress function. Accordingly, the processor 31 may be configured to determine a progress metric for each job based on a progress function for that job. The progress function may be unique to each job or it may be generic. In this example, the progress function is determined based on the job utility, the threshold utility and the initial utility value. It may thus be defined as: $pr(j_i) = pr(u(j_i), \tau_u(j_i), u_0(j_i))$. The progress function may be indicative of a ratio between current job utility and completion job utility, such as:

$$pr(j_i) = \frac{u(j_i) - u_0(j_i)}{\tau_u(j_i) - u_0(j_i)}$$

The processor 31 is configured to determine a job workload for each job. The job workload is based on the number of finished tasks for a job and the limit threshold for that job. A limit threshold may be defined as a requirement, which if satisfied would render the job failed. For example, it may be a maximum allowed number of tasks, so that if the number of finished tasks for a job reaches the limit threshold before the completion criterion is reached, the job is failed. The function of the limit threshold is to enforce a certain quality requirement for job completion, so that a job may only be complete in the event that tasks finished for that job are finished with a success rate above a limit threshold, i.e. it is not enough that the quantity of finished tasks results in the completion criterion being satisfied, the completion criterion also requires the quality of finished tasks to be above a threshold. It may represent an indication of how close the job is to the limit threshold being reached. In one example, the completed workload is defined as the fraction between the number of completed tasks and a maximum allowed number of tasks before the limit threshold is reached:

$$w(j_i) = \frac{|t_i^1|}{\zeta_i}$$

*Job completion probability and first metric*

The processor 31 is configured to determine a job completion probability for each job. The first metric for each job comprises this job completion probability. For example, the first metric may be based at least in part on this job completion probability, e.g. the first metric may consist essentially of (e.g. be equal to) the job completion probability or it may also take account of additional factors, or be otherwise based on the job completion probability. Each job has an uncertain outcome, and the completion probability represents the probability that the job will be completed. The completion probability may be determined based on the progress $pr(j_i)$ for a job, and a task history for the job $h(j_i)$, wherein the task history comprises the indication of finished tasks associated with the job. Such that:

$$c(j_i) = c\big( pr(j_i), h(j_i) \big) \in [0,1]$$

In some embodiments, the job completion probability may be determined based also on the rate of progress. The rate of progress comprises a temporal element which is based on an absolute amount of progress ($pr(j_i)$ as above) and a time taken since the job was initiated. The rate of progress for a job therefore provides an indication of how quickly open tasks are being successfully finished for that job. For instance, where there is a time deadline associated with the job completion (e.g. with the job completion criterion), and the data store 32 stores an association between indications of finished tasks and the time at which they were finished, the processor 31 may determine the job completion probability based on the rate at which previous tasks for that job are being finished (wherein the rate is determined from the task history). The rate may be used to extrapolate the count of finished tasks to predict an estimate for the time at which a sufficient number of tasks have been finished for the job to complete. The processor 31 may compare an estimated completion time with the required time constraints (completion criterion) to determine whether or not the job is likely to reach completion in time. The processor 31 may determine the job completion probability based on any time constraints associated with completion of the job. Such a completion probability is also time-dependent and thus provides a probability that the job will be completed within the required time constraints. In some embodiments, the processor 31 may be configured to determine such a job completion probability based on the progress function $pr(j_i)$ and the job workload $w(j_i)$ so that:

$$c(j_i) = \max\left( \min\left( \frac{pr(j_i)}{w(j_i)}, 1 \right), 0 \right)$$

In such circumstances, if the workload is zero, the completion probability would be 1, which represents that if infinite resources are allowed, at some point the job will be finalized. However, it is to be appreciated that the job completion probability may be determined in a number of different ways in which the contents of the stored association are used to determine the job completion probability. This may use, for example, a suitable mathematical model. The processor 31 may determine the job completion probability for each job in the same manner. Different types of jobs may have their job completion probability determined in different ways. For example, numerical coefficients or mathematical functions used to determine the job completion probability may differ between different systems for determining the job completion probability.

The task allocator 30 is configured to determine the job completion probability for each job in a dynamic manner. Each job completion probability is determined based on the contents of the stored association. In the event that a new task is finished, the stored association is updated to include an indication of that newly finished task. The indication of this new task is considered when the task allocator 30 next determines a job completion probability. The task allocator 30 is therefore said to be adaptive as the job completion probability determined, and hence the metrics used to allocate open tasks, are determined based on the most up to date contents of the dynamic data store 32. Thus, the processor 31 is configured to determine job completion probabilities which are current and up to date.

The job completion probabilities may be determined based also on the time at which the processor 31 determines the job completion probability. This may be of particular use where there are time constraints associated with the job completion, and the job completion probability is time-dependent. Determining the job completion probability based on a present time enables a rate of convergence towards completion to be determined, which is compared with the time constraint. This may be used to determine whether or not it is expected that the job will be completed (i.e. the completion criterion will be satisfied) on time. In the event that the association comprises an indication of the time at which a task is finished, use of the present time when determining a time-dependent job completion probability may provide improved accuracy.

*Return function and second metric*

The processor 31 is configured to determine a second metric comprising a return function. The second metric may comprise the return function; it may be determined based at least in part on the return function. The return function is determined based on a probability-adjusted marginal return and a marginal job completion probability increase. A user will receive a return, e.g. a reward, in the event that they finish a task (successfully) and the job that task is associated with is completed. This return is a discrete value, it is either received by the user, in the event that the job is completed, or it is not, in the event that the job is failed. The probability-adjusted marginal return provides an indication of the return a user would expect to receive on average, i.e. if the scenario was repeated a plurality of times and where sometimes the user would receive the return and other times the user would not. The marginal job completion probability increase provides an indication of the change to job completion probability that would arise as a result of a user finishing a task for that job. For example, a job a long way from completion may be associated with a significant increase in job completion probability after one task has finished because that one task represents a significant portion of the number of tasks finished for that job. Thus, the marginal job completion probability increase would be larger than for a task being finished where a job is very near to completion.

The return function is probabilistic. It is determined based on the return the user stands to receive in the event that the job is completed, and the probability that said job is completed (and thus that they will receive said return). For example, a probability-adjusted return determined for a job which is very unlikely to be completed, but which is associated with a very high user return may be similar to a probability-adjusted return determined for a job which is very likely to be completed, but which is associated with a very low user return. However, in the first example, if the user does receive the return it will be the full return, and thus higher than for the second example (and higher than the probability-adjusted return). The received return is either the full return or zero.

The return a user stands to receive for finishing a task, in the event that the job associated with that task is completed, is based on a marginal return and an implicit return. The marginal return is based on the probability-adjusted marginal return, and the implicit return is based on the marginal job completion probability increase. The marginal return $r(j_i)$ is determined based on a portion that task represents for the overall job. The marginal return represents the return a user may receive for completing one task within the job. The implicit return is determined based on the contribution that the user finishing the task makes to the job completion probability for the associated job, i.e. the resulting increase in job completion probability as a result of their finishing (successfully) a task. The implicit return is determined based on a marginal job completion probability increase. For an outstanding task $t_{i,k}$ in job $j_i$, the marginal job completion probability is defined as: $\delta(c(j_i)) = c(j_i \cap t_{i,k}) - c(j_i)$, where, $j_i \cap t_{i,k}$ represents the job $j_i$ after the completion of task $t_{i,k}$. The total return a user stands to receive may be a combination of the marginal return and the implicit return. It may be expressed as a sum: $r(j_i) + \alpha^r\delta(c(j_i))$, where $\alpha^r$ is a normalising factor.

The marginal return $r(j_i, u)$ for a job $j_i$ is determined based on a user-dependent metric $q(t_{i,k}, u) \in [0,1]$. The user-dependent metric may represent a characteristic of the user based on the indication of finished tasks associated with that user stored in the association. For example, this may be a user-quality metric which is determined based on the number of successful tasks associated with that user, e.g. it may be an accuracy score for their finished tasks, such as an average of previous success in finished tasks, or an average quality score for finished tasks. For instance, the user-dependent metric may represent a task completion probability, or a probable task completion quality. The user-dependent metric is used to provide an indication of how much additional work is needed for job completion. For instance, the number of finished tasks required for a job to be complete may be dependent on a quality associated with the finished tasks. In the event that a task is finished with a lower quality, more tasks may need to be finished for the job to be completed, and vice versa.

The marginal return is also determined based on the number of tasks to be finished for the job to be complete $|t_i|$ and a total amount of return for the job $p_i$. The data store 32 may store an indication of the total amount of return for each of the available jobs. The marginal return may be determined based on a combination of the user-dependent metric, the number of tasks to be finished for the job to be complete and the total return for the job. For example:

$$r(j_i, u) = r(t_{i,k}, u) = q(t_{i,k}, u) * \frac{\rho_j}{|t_i|}$$

The processor 31 is configured to determine a probability-adjusted marginal return $\tilde{r}(j_i, u)$. The processor 31 may determine the return function as above, except based on the probability-adjusted marginal return rather than the marginal return. This enables the return function to be determined including an indication of the probability that the return will be received. The processor 31 is configured to determine the probability-adjusted marginal return so that it is based on the job completion probability. For instance, the probability-adjusted marginal return may be determined based on a combination of the marginal return and the job completion probability. For example, the probability-adjusted marginal return may be defined as:

$$\tilde{r}(j_i, u) = \tilde{r}(t_{i,k}, u) = q(t_{i,k}, u) * \frac{\rho_j}{|t_i|} * c(j_i)$$

The processor 31 is configured to determine the return function based on the probability-adjusted marginal return and the implicit return. This may comprise a combination. It may comprise a sum. For example, the return function may be determined as:

$$R(j_i, u) = \tilde{r}(j_i, u) + \alpha^r \delta(c(j_i)) = q(t_{i,k}, u) * \frac{\rho_j}{|t_i|} * c(j_i) + \alpha^r \delta(c(j_i))$$

*User history and third metric*

The processor 31 is configured to determine a third metric comprising an indication of user history for the user. The third metric may be based at least in part on the indication of user history; it may be the indication of user history. The third metric is determined based on the jobs associated with the second user and the first metrics for said jobs. In particular, the third metric is determined based on each of the finished tasks in the association which are associated with: (i) the second user, and (ii) jobs which are not complete. The third metric is based on an amount of return a user could expect to receive in the event that all of the incomplete jobs for which the user has finished tasks are completed.

The indication of user history may be determined based on a job completion probability for each of the incomplete jobs. It may therefore represent an expected return which the user could expect to receive based on their presently finished tasks. This may influence the task allocation to the user, as realisation of this expected return may increase in likelihood in the event that the user is allocated, and then finishes, open tasks associated with the incomplete jobs, as this would bring those jobs closer to completion. In one example, the indication of user history may be defined as:

$$e(j_i, u) = \alpha^e * c(j_i) * \sum_{\substack{t_{i,k} \in t_i^1, \\ u(t_{i,k}) = u}} r(t_{i,k}, u)$$

Where $u(t_{i,k})$ is a function that returns the user who has authored a task, $t_{i,k} \in t_i^1$ are the completed tasks for the given job, $\alpha^e$ is a hyper parameter. The summation represents the total return that a user stands to receive upon job completion.

*Job relevance function*

The task allocator 30 is configured to allocate open tasks based on the first, second and third metrics. The contribution each metric makes to the overall determination may vary depending on the circumstances. It is to be appreciated in the context of this disclosure that there may be a plurality of different ways in which these metrics could be used to determine which open tasks to allocate. For example, the exact determination may be based on a mathematical model or a logical algorithm. In one example, a job relevance function $y(j_i, u)$ is used, which may be defined as:

$$y(j_i, u) = f\big(R(j_i, u), c(j_i), e(j_i, u)\big)$$

$$= f\left( q(t_{i,k}, u) * \frac{\rho_j}{|t_i|} * c(j_i) + \alpha^r \delta\big(c(j_i)\big), c(j_i), \alpha^e * c(j_i) * \sum_{\substack{t_{i,k} \in t_i^1, \\ u(t_{i,k}) = u}} r(t_{i,k}, u) \right)$$

The task allocator 30 may therefore determine the metrics, and thus which open task to allocate, based on the contents of the dynamically updated association. The job relevance function may produce a numerical output, and the open tasks may be allocated based on this output. For example, a job with the highest numerical output may be identified, and available open tasks for that job may be allocated to the second user.

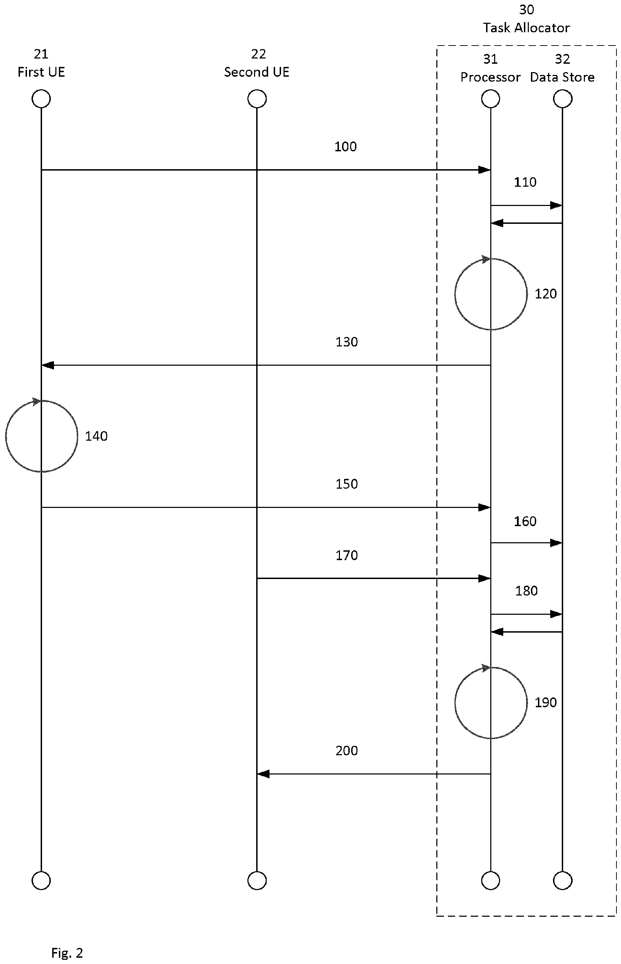

Fig. 2 shows an example method of operation of the crowd sourcing network 10 of Fig. 1.

At step 100, a first user (at the first UE 21) communicates with the task allocator 30 to request a task. This may be in the form of the first UE 21 sending a first task request message to the task allocator 30.

At step 110, in response to receiving the request for an open task from the first user, the processor 31 accesses the data store 32. The processor 31 accesses the association to obtain the association between the indication of finished tasks, the plurality of users and the plurality of jobs. It also accesses the data store 32 to obtain, for the relevant jobs, an indication of the completion criterion.

At step 120, based on the obtained data, the processor 31 determines the first, second and third metrics for the first user and the available jobs (as well as for any other relevant jobs for which the metrics may be used). These metrics are used to determine a job relevance score for each of the jobs with available open tasks, which the first user may work on. Based on the job relevance score, an open task, or open tasks, may be allocated for the first user.

At step 130, the allocated task is communicated to the first UE 21. This may be in the form of a first task allocation message being sent to the first UE 21. The first task allocation message may comprise an indication of the allocated task(s).

At step 140, the first user may select to work on an open task based on the allocated tasks. For example, this may comprise selecting one open task out of a plurality of open tasks indicated in the task allocation message. In response to receiving the task allocation message, the first user may select and work on the open task. The first task allocation message may comprise the open task itself, or it may comprise a link configured to re-direct the first UE 21 to a location where the open task may be worked on.

At step 150, in the event that the first user finishes the task, this is communicated to the task allocator 30. This may be in the form of sending a first task completion message to the task allocator 30. This may comprise an indication of the success of the finished task, or a quality score for the finished task. In the event that it does not, the task allocator 30 may determine such an indication.

At step 160, in response to receiving the indication of the task being finished, the processor 31 updates the association in the data store 32 to include an indication of the finished task, associated with the first user and the corresponding job. The association thus comprises an indication of the previously finished tasks along with an indication of the newly finished task.

At step 170, a second user (at the second UE 22) communicates with the task allocator 30 to request an open task. This may be in the form of the second UE 22 sending a second task request message to the task allocator 30.

At step 180, in response to receiving the request for an open task from the second user, the processor 31 accesses the data store 32. The processor 31 accesses the association to obtain the association between the indication of finished tasks, the plurality of users and the plurality of jobs. This now comprises an indication of the newly finished task, associated with the first user and the corresponding job. The processor 31 also accesses the data store 32 to obtain, for the relevant jobs, an indication of the completion criterion.

At step 190, based on this obtained data, the processor 31 determines the first, second and third metrics for the second user and the available jobs (as well as for any other relevant jobs for which the metrics may be used). These metrics are used to determine a job relevance score for each of the jobs with open tasks, which the second user may work on. Based on the job relevance score, an open task, or open tasks, may be allocated for the second user. The metrics used to determine said job relevance score are determined based on the contents of the association which includes the data regarding the newly finished task. The second and third metrics are also user-dependent. As such, the determined allocation of open tasks at step 120 for the first user may be different to the determined allocation of open tasks at step 190 for the second user. In the event that steps 170 to 200 occur where the first and second user are the same, the determined open task allocation may still change as the association is updated after the first task is finished. This update may influence the determination of the metrics, and thus the allocation of open tasks to the first user.

At step 200, the allocated open task is communicated to the second UE 22. This may be in the form of a second task allocation message being sent to the second UE 22. The second task allocation message may comprise an indication of the allocated task(s).

In some embodiments, the open task allocation may be determined based on more than three metrics. It may be determined based on four metrics. The fourth metric may be an instant return metric. The instant return may be indicative of a return a user may receive in response to finishing (successfully) a task. The instant return is not dependent on job completion. The fourth metric may only be applicable or used for some jobs, for instance jobs for which the job proprietor has indicated that instant returns may be used. In such circumstances, a portion of the total return may be allocated to instant returns, and a portion may be allocated to the return as determined above (marginal and implicit). The portion allocated to instant returns may be divided equally based on the number of tasks required for job completion, or it may be divided based on another system, for example a task-quality dependent system. Instant return may only be received in the event that the finished task satisfies a quality threshold. Different jobs may therefore have a different breakdown for total return, with some having a higher proportion of return allocated to instant or job-completion dependent return. The task allocator 30 may determine which open tasks to allocate also based on the instant return metric.

The task allocator 30 may determine how to allocate open tasks based on the instant return metric by using user profiles. The data store 32 may store, for each user, a user profile which comprises an indication of previous tasks the user has finished. In particular, the user profile may comprise an association between tasks the user has finished and an indication of the instant return/job completion dependent return breakdown for that job. The breakdown relates to the relative proportion of total return for each of the instant return and job completion dependent return. Based on such indications, the task allocator 30 may determine a user-specific breakdown, which indicates, based on past behaviour, the user's preferences with regards to how much of the return is instant and how much is job-dependent. This may be used to determine which open tasks to allocate to that user. For instance, open tasks may be allocated which have a similar breakdown to an average breakdown for that user, where the average is determined for numerical values of the relative returns.

Each user profile may also store indications of other characteristics for each user. Such indications of characteristics may be used when determining the user-dependent metric. Another characteristic which may be stored in a user profile is an indication of job completion probabilities, for jobs for which the user has finished tasks, at the time the user selected to work on the task. This may enable user patterns to be observed, such as how often the user works on jobs which have a low completion probability. Such patterns may be used when determining which open tasks to allocate to a user, as the task allocator 30 may determine and/or identify that a user typically works on open tasks within a selected range of job completion probability.

The task allocator 30 may then allocate open tasks to the user based on this selected range, for example, only allocating open tasks which fall within that range.

In some embodiments, in the event that an open task is allocated whilst another open task is being worked on, the metrics (and thus task allocations) are determined based on the current state of the data store 32. This does not include any reference to pending tasks. In other embodiments, in such circumstances the task allocator 30 may be configured to determine the metrics also based on an indication of pending open tasks. This may comprise assuming a standard (e.g. the average or expected) probability that the open task is finished successfully; it may comprise determining a probability of completion for the open tasks by the user with whom they are pending based on the user quality metric. It may include determining an expected outcome and/or time for finishing of the tasks. In some embodiments, the pending open tasks may be considered failed.

It is to be appreciated that although the task allocator 30 is described as adding indications of finished tasks to the data store 32 in direct response to receiving an indication of that task being finished, there may be some circumstances in which there is a delay. For instance, when the crowd sourcing network 10 experiences very high levels of traffic, a plurality of indications of tasks being finished may be received within a very small time period. At the same time a plurality of indications may be received that users are looking for open tasks to be allocated to them. This combination may result in the data being added to the data store 32 in a delayed manner and/or the metrics being determined for a user based on indications in the data store 32 which do not include the most-recently finished tasks. In such circumstances uploads to the data store 32 may then occur in bulk, with all indications received within a certain time frame being uploaded together. Where such bulk uploading occurs, any determinations made based on the newly bulk uploaded data may take an average of this data, and determine based on the average.

It is to be appreciated that, whilst the above system and method has been described for allocating open tasks in the event that a user is looking for an open task to work on, the same approach may be taken by the task allocator 30 in a routine. For instance, this may enable a quicker allocation of open tasks if the task allocator 30 has recently determined relevant metrics which may then be used when a user is actually looking for an open task. For instance, where the rate of convergence is determined based on indications of task finishing times which are stored in time bins, if a user requests an open task whilst within the same time bin, the routinely determined metrics would still be valid.

The user equipment illustrated in Figure 1 may be a mobile telecommunications handset, but it will be appreciated in the context of the present disclosure that this encompasses any user equipment (UE) for communicating over a wide area network and having the necessary data processing capability. It can be a hand-held telephone, a laptop computer equipped with a mobile broadband adapter, a tablet computer, a Bluetooth gateway, a specifically designed electronic communications apparatus, or any other device. It will be appreciated that such devices may be configured to determine their own location, for example using global positioning systems GPS devices and/or based on other methods such as using information from WLAN signals and telecommunications signals. The user device may comprise a computing device, such as a personal computer, or a handheld device such as a mobile (cellular) telephone or tablet. Wearable technology devices may also be used. Accordingly, the communication interface of the devices described herein may comprise any wired or wireless communication interface such as WI-FI (RTM), Ethernet, or direct broadband internet connection, and/or a GSM, HSDPA, 3GPP, 4G or EDGE communication interface. The task allocator 30 may be provided by a server.

Messages described herein may comprise a data payload and an identifier (such as a uniform resource indicator, URI) that identifies the resource upon which to apply the request. This may enable the message to be forwarded across the network to the device to which it is addressed. Some messages include a method token which indicates a method to be performed on the resource identified by the request. For example these methods may include the hypertext transfer protocol, HTTP, methods "GET" or "HEAD". The requests for content may be provided in the form of hypertext transfer protocol, HTTP, requests, for example such as those specified in the Network Working Group Request for Comments: RFC 2616. As will be appreciated in the context of the present disclosure, whilst the HTTP protocol and its methods have been used to explain some features of the disclosure, other internet protocols, and modifications of the standard HTTP protocol may also be used.

As described herein, network messages may include, for example, HTTP messages, HTTPS messages, Internet Message Access Protocol messages, Transmission Control Protocol messages, Internet Protocol messages, TCP/IP messages, File Transfer Protocol messages or any other suitable message type may be used.

The processor 31 of the task allocator 30 (and any of the activities and apparatus outlined herein) may be implemented with fixed logic such as assemblies of logic gates or programmable logic such as software and/or computer program instructions executed by a processor. Other kinds of programmable logic include programmable processors, programmable digital logic (e.g., a field programmable gate array (FPGA), an erasable programmable read only memory (EPROM), an electrically erasable programmable read only memory (EEPROM)), an application specific integrated circuit, ASIC, or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store 32 of the server 100 (and any of the apparatus outlined herein).

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. For example the functionality provided by the data store 32 may in whole or in part be provided by a processor having one more data values stored on-chip. In addition the processing functionality may also be provided by devices which are supported by an electronic device. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in not-transitory form. Hardware includes computers, handheld devices, programmable processors, general purpose processors, application specific integrated circuits, ASICs, field programmable gate arrays, FPGAs, and arrays of logic gates.

Other examples and variations of the disclosure will be apparent to the skilled addressee in the context of the present disclosure.

**Claims**

1. A task allocator for a crowd sourcing network for facilitating the completion of jobs by a plurality of users, each job comprising a plurality of tasks, the task allocator comprising a data store storing:

   an association between (i) a plurality of finished tasks, (ii) a plurality of users and (iii) a plurality of jobs comprising available jobs for which tasks are to be allocated; and
   for each job, a completion criterion, wherein in the event that the completion criterion is satisfied, the job is complete;

   wherein the task allocator is configured so that, in the event that a task is finished by a first user, the task allocator adds, to the stored association, an identifier of the finished task, the job associated with the finished task and the first user; and
   wherein the task allocator is configured to allocate an open task to a second user based on a plurality of metrics, wherein the plurality of metrics comprises:

   a first metric for each of a plurality of available jobs, wherein each first metric comprises a probability that its respective corresponding available job will be completed, wherein the first metric is determined based on an indication of finished tasks associated with the corresponding available job and the completion criterion for said available job, wherein the indication of finished tasks is determined based on the stored association;
   a second metric for the second user for each of the plurality of available jobs, wherein each second metric comprises a return function determined based on: (i) a probability for the task being finished estimated based on tasks finished by the second user and (ii) the first metric for said available job; and
   a third metric for the second user, wherein the third metric is determined based on: (a) finished tasks, finished by the second user and forming part of an available job, and (b) the first metric for each said available job comprising said finished tasks finished by the second user.

2. The task allocator of claim 1 wherein in the event that an open task is finished and a quality threshold for said task is satisfied, the task is successful; and
   in the event that the quality threshold is not satisfied, the task is unsuccessful.

3. The task allocator of claim 2 wherein the association comprises an indication of success for each finished task; and
   wherein each user has a quality metric based on indications of success for each of their finished tasks.

4. The task allocator of claim 3 wherein at least one of the second metric and the third metric is determined based on the user quality metric.

**5.** The task allocator of any of the preceding claims wherein the association comprises a time at which each task was finished; and
wherein the first metric for each job is determined based on the times at which tasks for said job have been finished.

**6.** The task allocator of any of the preceding claims wherein each job has a limit threshold, and in the event that the limit threshold is satisfied before the job completion criterion, the job is unsuccessful; and
wherein the first metric for each job is determined based on the limit threshold for said job.

**7.** The task allocator of any of the preceding claims wherein the stored association is dynamic so that in the event that a new open task is finished by the first user, an indication of the new finished task is added to the association; and
wherein, in the event that the task allocator determines that the second user is looking for a task, the task is allocated to the second user adaptively based on the dynamic association.

**8.** The task allocator of claim 7 wherein allocating the open task adaptively comprises allocating the open task based on the indication of finished tasks in the stored association, wherein the finished tasks include the new finished task.

**9.** A task allocator comprising a data store storing:

a dynamic association between (i) a plurality of finished tasks, (ii) a plurality of users and (iii) a plurality of jobs comprising available jobs for which tasks are to be allocated; and
for each job, a completion criterion, wherein in the event that the completion criterion is satisfied, the job is complete;

wherein the task allocator is configured to allocate an open task adaptively, based on the dynamic association, to a second user based on a plurality of metrics, wherein the plurality of metrics comprises:

a first metric for each of a plurality of available jobs, wherein each first metric comprises a probability that its respective corresponding available job will be completed, wherein the first metric is determined based on an indication of finished tasks associated with the corresponding available job and the completion criterion for said available job;
a second metric for the second user for each of the plurality of available jobs, wherein each second metric comprises a return function determined based on: (i) a task completion probability estimated based on tasks finished by the second user and (ii) the first metric for said available job; and
a third metric for the second user, wherein the third metric is determined based on: (a) finished tasks, finished by the second user and forming part of an available job, and (b) the first metric for each said available job comprising said finished tasks finished by the second user.

**10.** The task allocator of claim 9 wherein the dynamic association comprises an association which is updated in the event that an open task is finished by a first user.

**11.** The task allocator of claim 10 wherein updating the dynamic association comprises adding an identifier of the finished task, the associated job and the first user to the stored association.

**12.** The task allocator of any one of claims 9 to 11 wherein allocating the open task adaptively to the second user comprises:

in the event that an indication of a new finished task is added to the dynamic association and the second user is looking for an open task, allocating an open task to the second user based on the finished tasks in the dynamic association, wherein the finished tasks include the new finished task.

**13.** A method of allocating tasks in a crowd sourcing network for facilitating the completion of jobs by a plurality of users, the method comprising:

in the event that a task is finished by a first user, adding, to a stored association, an identifier of: (i) the finished task, (ii) the job associated with the finished task and (iii) the first user, wherein the stored association stores:

an association between (i) a plurality of finished tasks, (ii) a plurality of users and (iii) a plurality of jobs comprising available jobs for which tasks are to be allocated; and

for each job, a completion criterion, wherein in the event that the completion criterion is satisfied, the job is complete; and

wherein the method comprises:

determining a first metric for each of a plurality of available jobs, wherein each first metric comprises a probability that its respective corresponding available job will be completed, wherein the first metric is determined based on an indication of finished tasks associated with the corresponding available job and the completion criterion for said available job, wherein the indication of finished tasks is determined based on the stored association;

determining a second metric for a second user for each of the plurality of available jobs, wherein each second metric comprises a return function determined based on: (i) a task completion probability estimated based on tasks finished by the second user and (ii) the first metric for said available job;

determining a third metric, wherein the third metric is determined based on: (a) finished tasks, finished by the second user and forming part of an available job, and (b) the first metric for each said available job comprising said finished tasks finished by the second user; and

allocating an open task to the second user based on a plurality of metrics, wherein the plurality of metrics comprises the first, second and third metrics.

14. A method of allocating tasks in a crowd sourcing network for facilitating the completion of jobs by a plurality of users, each job comprising a plurality of tasks, the method comprising:

allocating an open task adaptively, based on a dynamic association, to a second user based on a plurality of metrics, wherein the dynamic association comprises:

an association between (i) a plurality of finished tasks, (ii) a plurality of users and (iii) a plurality of jobs comprising available jobs for which tasks are to be allocated; and

for each job, a completion criterion, wherein in the event that the completion criterion is satisfied, the job is complete; and

wherein the plurality of metrics comprises:

a first metric for each of a plurality of available jobs, wherein each first metric comprises a probability that its respective corresponding available job will be completed, wherein the first metric is determined based on an indication of finished tasks associated with the corresponding available job and the completion criterion for said available job;

a second metric for the second user for each of the plurality of available jobs, wherein each second metric comprises a return function determined based on: (i) a task completion probability estimated based on tasks finished by the user and (ii) the first metric for said available job; and

a third metric for the second user, wherein the third metric is determined based on: (a) finished tasks, finished by the second user and forming part of an available job, and (b) the first metric for each said available job comprising said finished tasks finished by the user.

15. A computer program product comprising program instructions configured to program a processor to perform the method of claims 13 and 14.

10
Crowd
Sourcing
Network

Fig. 1

Fig. 2

Europäisches
Patentamt

European
Patent Office

Office européen
des brevets

# EUROPEAN SEARCH REPORT

Application Number

EP 17 19 0687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 905 729 A1 (TATA CONSULTANCY SERVICES LTD [IN]) 12 August 2015 (2015-08-12) * paragraphs [0015] - [0023]; figures 1-3 * | 1-15 | INV. G06Q10/06 |
| X | US 2014/165071 A1 (CELIS LAURA E [IN] ET AL) 12 June 2014 (2014-06-12) * paragraphs [0025] - [0032]; figures * | 1-15 | |

TECHNICAL FIELDS
SEARCHED     (IPC)

G06Q

The present search report has been drawn up for all claims

| Place of search | Date of completion of the search | Examiner |
|---|---|---|
| Munich | 24 October 2017 | Aguilar, José María |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 19 0687

This annex lists the patent family members relating to the patent documents cited in  the above-mentioned European search report.
The members are as contained in the European Patent Office EDP file on
The European Patent Office is in no way liable for these particulars which are merely given for the purpose of information.

24-10-2017

| Patent document cited in search report | | Publication date | Patent family member(s) | | Publication date |
|---|---|---|---|---|---|
| EP 2905729 | A1 | 12-08-2015 | EP | 2905729 A1 | 12-08-2015 |
| | | | US | 2015220864 A1 | 06-08-2015 |
| US 2014165071 | A1 | 12-06-2014 | NONE | | |

For more details about this annex : see Official Journal of the European Patent Office, No. 12/82

EPO FORM P0459